# EUROPEAN PATENT APPLICATION

(11) **EP 4 628 245 A1**
(43) Date of publication of application: **08.10.2025**
(21) Application number: 23897825.8
(22) Date of filing: 29.11.2023
(51) Int. Cl.: B23K 26/361, B23K 26/00, B23K 26/03, B23K 26/064, B23K 26/067, B23K 26/082

(54) **PORTABLE LASER SURFACE PROCESSING DEVICE AND LASER SURFACE PROCESSING SYSTEM**

(30) Priority: 29.11.2022 JP 2022190285
(71) Applicant: FURUKAWA ELECTRIC CO., LTD., Tokyo 100-8322 (JP)
(72) Inventor: NISHII, Ryosuke, Tokyo 100-8322 (JP); SAITO, Manami, Tokyo 100-8322 (JP); IWABUCHI, Hiroki, Tokyo 100-8322 (JP); UMENO, Kazuyuki, Tokyo 100-8322 (JP)
(74) Representative: SSM Sandmair
(86) International application number: PCT/JP2023/042734
(87) International publication number: WO 2024/117178

(57) **Abstract**

A portable laser surface processing device includes, for example, a casing configured to house an optical component and a beam shaper serving as the optical component configured to divide laser light into a plurality of beams, wherein the laser light divided into the plurality of beams by the beam shaper is output to a surface of an object to process the surface, and the portable laser surface processing device includes a moving mechanism configured to move the beam shaper with respect to the casing such that spots of the plurality of beams move on the surface while the laser beam is output. The portable laser surface processing device may further include, as the moving mechanism, a rotation mechanism configured to rotate the beam shaper with respect to the casing such that the spots of the plurality of beams rotate on the surface.

## Description

### Field

The present invention relates to a portable laser surface processing device and a laser surface processing system.

### Background

A method of removing a coating or an adhering substance by irradiation with laser light has been known (For example, Patent Literature 1).

### Citation List

### Patent Literature

Patent Literature 1: Japanese Patent No. 5574354

### Summary

### Technical Problem

According to the method of Patent Literature 1, laser light irradiation points are scanned rotationally in a circular form and coating on a surface is removed.

Portable laser surface processing devices of this type are beneficial if portable laser surface processing devices that make it possible to further reduce variation in the processing state according to the site and processing inconsistency are obtained.

An object of the present invention is to obtain a portable laser surface processing device and a laser surface processing system that are improved and new and that make it possible to reduce variation in the processing state according to the site and processing inconsistency. Solution to Problem

A portable laser surface processing device according to the present invention, for example, includes: a casing configured to house an optical component; and a beam shaper serving as the optical component configured to divide laser light into a plurality of beams, wherein the portable laser surface processing device is configured to output the laser light divided into the plurality of beams by the beam shaper to a surface of an object to process the surface, and the portable laser surface processing device comprises a moving mechanism configured to move the beam shaper with respect to the casing such that spots of the plurality of beams move on the surface while the laser light is output.

In the portable laser surface processing device, the moving mechanism may include a rotation mechanism configured to rotate the beam shaper with respect to the casing such that the spots of the plurality of beams rotate on the surface.

In the portable laser surface processing device, the rotation mechanism may include an electric motor.

In the portable laser surface processing device, the rotation mechanism may include an air motor.

The portable laser surface processing device may be configured to output the laser light in a first direction, and the plurality of beams may form a pattern of a plurality of spots that rotate about a rotation center on a virtual irradiation surface intersecting with the first direction, and in a state of not rotating, the pattern may include a plurality of spots that are separate from the rotation center on the virtual irradiation surface and does not include the spot overlapping the rotation center.

The portable laser surface processing device may be configured to output the laser light in a first direction, the plurality of beams may form a pattern of a plurality of spots that rotate about a rotation center on a virtual irradiation surface intersecting with the first direction, and in a state of not rotating, the pattern may include a plurality of spots that are separate from the rotation center on the virtual irradiation surface and include the spot overlapping the rotation center and having power lower than that of the spots separating from the rotation center.

The portable laser surface processing device may be configured to output the laser light in a first direction, the plurality of beams may form a pattern of a plurality of spots that rotate about a rotation center on a virtual irradiation surface intersecting with the first direction, and in a state of not rotating, the pattern may include a plurality of spots with different distances from the rotation center on the virtual irradiation surface.

The portable laser surface processing device may be configured to output the laser light in a first direction, the plurality of beams may form a pattern of a plurality of spots that rotate about a rotation center is formed on a virtual irradiation surface intersecting with the first direction, and in a state of not rotating, the pattern may include a plurality of first spots that are positioned on a circumference with a first radius from the rotation center and a plurality of second spots that are positioned on a circumference with a second radius longer than the first radius from the rotation center on the virtual irradiation surface, and power of the second spots may be larger than power of the first spots.

The portable laser surface processing device may be configured to output the laser light in a first direction, the plurality of beams may form a pattern of a plurality of spots that rotate about a rotation center on a virtual irradiation surface intersecting with the first direction, and in a state of not rotating, the pattern may include a plurality of first spots that are positioned on a circumference with a first radius from the rotation center and a plurality of second spots that are positioned on a circumference with a second radius longer than the first radius from the rotation center on the virtual irradiation surface, and the number of the second spots may be larger than the number of the first spots.

The portable laser surface processing device may be configured to output the laser light in a first direction, the plurality of beams may form a pattern of a plurality of spots that rotate about a rotation center on a virtual irradiation surface intersecting with the first direction, and in the pattern in a state of not rotating, the spots adjacent to each other are arranged such that an interval of the spots is equal to or larger than a first distance and are arranged such that a difference between distances from the rotation center to the spots is smaller than the first distance.

The portable laser surface processing device may be configured to output the laser light in a first direction, the plurality of beams may form a pattern of a plurality of spots that rotate about a rotation center on a virtual irradiation surface intersecting with the first direction, and in a state of not rotating, the pattern may include a plurality of spots that are arranged substantially along a line passing through the rotation center.

In the portable laser surface processing device, in a state of not rotating, the pattern may include a plurality of spots that are arranged in an I shape, a T shape, or a cross shape.

In the portable laser surface processing device, in a state of not rotating, the pattern may include a plurality of spots that are arranged along a curve with an angle with respect to a radial direction of the rotation center that gradually increases as it separates from the rotation center.

In the portable laser surface processing device, the moving mechanism may include a reciprocation mechanism configured to reciprocate the beam shaper with respect to the casing such that the spots of the plurality of beams reciprocate between a first position and a second position on the surface.

The portable laser surface processing device may include a laser scanner configured to scan the laser light on the surface.

In the portable laser surface processing device, the laser light may be continuous waves.

In the portable laser surface processing device, the optical component may be configured such that the optical component is replaceable.

In the portable laser surface processing device, the optical component may include a lens, and the lens may be configured such that a position in an optical axis direction is changeable.

The portable laser surface processing device may include a guide extending from the casing to the surface to make a contact with the surface.

The portable laser surface processing device may include a distance measurement mechanism fixed to the casing and configured to measure a distance to the surface.

The portable laser surface processing device may include a display mechanism configured to display the distance measured by the distance measurement mechanism.

The portable laser surface processing device may include an alert output mechanism configured to output an alert when the distance measured by the distance measurement mechanism is out of a predetermined range.

The portable laser surface processing device may include a position detection mechanism fixed to the casing and configured to detect a position of processing on the surface.

The portable laser surface processing device may include an alert output mechanism configured to output an alert when an amount of change in the position of processing that is detected by the position detection mechanism over time is smaller than a predetermined amount.

The portable laser surface processing device may include a temperature detection mechanism fixed to the casing and configured to detect a temperature of the surface.

The portable laser surface processing device may include an alert output mechanism configured to output an alert when the temperature detected by the temperature detection mechanism is larger than a predetermined temperature.

The portable laser surface processing device may include a cooling mechanism configured to cool the casing.

In the portable laser surface processing device, the casing may have a substantially cylindrical shape.

The portable laser surface processing device may include a grip for gripping.

In the portable laser surface processing device, the grip may protrude from the casing.

In the portable laser surface processing device, the casing and the grip may be connected such that the casing and the grip are foldable.

In the portable laser surface processing device, the casing and the grip may be configured such that an angle of folding is changeable.

In the portable laser surface processing device, the grip may be bendable.

In the portable laser surface processing device, the grip may be configured such that a shape of bending is changeable.

A laser surface processing system according to the present invention, for example, includes: the portable laser surface processing device; a light source device including a laser device configured to output the laser light; a cable extending between the portable laser surface processing device and the light source device, wherein the cable may include optical fibers configured to transmit laser light output by the laser device to the portable laser surface processing device.

### Advantageous Effects of Invention

According to the present invention, for example, it is possible to obtain a portable laser surface processing device and a laser surface processing system that are more improved and that are new.

### Brief Description of Drawings

FIG. 1 is an exemplary schematic configuration diagram of a laser surface processing system of an embodiment.
FIG. 2 is an exemplary schematic configuration diagram of a portable laser surface processing device of a first embodiment.
FIG. 3 is an illustrative view illustrating a concept of a principle of a diffractive optical element contained in a portable laser surface processing device of the first embodiment.
FIG. 4 is a schematic plane view illustrating an example of a spot pattern that is formed on a virtual irradiation surface by the portable laser surface processing device of the embodiment.
FIG. 5 is a schematic plane view illustrating an example of the spot pattern that is formed on the virtual irradiation surface by the portable laser surface processing device of the embodiment.
FIG. 6 is a schematic plane view illustrating an example of the spot pattern that is formed on the virtual irradiation surface by the portable laser surface processing device of the embodiment.
FIG. 7 is a schematic plane view illustrating an example of the spot pattern that is formed on the virtual irradiation surface by the portable laser surface processing device of the embodiment.
FIG. 8 is a schematic plane view illustrating an example of the spot pattern that is formed on the virtual irradiation surface by the portable laser surface processing device of the embodiment.
FIG. 9 is a schematic plane view illustrating an example of the spot pattern that is formed on the virtual irradiation surface by the portable laser surface processing device of the embodiment.
FIG. 10 is a schematic plane view illustrating an example of the spot pattern that is formed on the virtual irradiation surface by the portable laser surface processing device of the embodiment.
FIG. 11 is a schematic plane view illustrating an example of the spot pattern that is formed on the virtual irradiation surface by the portable laser surface processing device of the embodiment.
FIG. 12 is a schematic plane view illustrating an example of the spot pattern that is formed on the virtual irradiation surface by the portable laser surface processing device of the embodiment.
FIG. 13 is an exemplary schematic configuration diagram of part of a portable laser surface processing device of a second embodiment.
FIG. 14 is a schematic plane view illustrating an example of a spot pattern that is formed on a virtual irradiation surface by a portable laser surface processing device of the second embodiment.
FIG. 15 is an exemplary and schematic side view of part of a portable laser surface processing device of a third embodiment.
FIG. 16 is an exemplary and schematic side view of part of a portable laser surface processing device of a fourth embodiment.
FIG. 17 is an exemplary block diagram of the portable laser surface processing device of the fourth embodiment.
FIG. 18 is an exemplary and schematic side view of part of a portable laser surface processing device of a fifth embodiment.
FIG. 19 is an exemplary block diagram of the portable laser surface processing device of the fifth embodiment.
FIG. 20 is an exemplary and schematic plane view illustrating an area on a surface of an object, which is an area processed by the portable laser surface processing device of the fifth embodiment.
FIG. 21 is an exemplary and schematic side view of part of a portable laser surface processing device of a sixth embodiment.
FIG. 22 is an exemplary block diagram of a portable laser surface processing device of the sixth embodiment.
FIG. 23 is an exemplary and schematic side view of part of a portable laser surface processing device of a seventh embodiment.
FIG. 24 is a schematic plane view illustrating an example of a spot pattern that is formed on a virtual irradiation surface by a portable laser surface processing device of a seventh embodiment.
FIG. 25 is a schematic plane view illustrating an example of the spot pattern that is formed on the virtual irradiation surface by the portable laser surface processing device of the embodiment.
FIG. 26 is a schematic plane view illustrating an example of the spot pattern that is formed on the virtual irradiation surface by the portable laser surface processing device of the embodiment.
FIG. 27 is a schematic plane view illustrating an example of the spot pattern that is formed on the virtual irradiation surface by the portable laser surface processing device of the embodiment.
FIG. 28 is a schematic plane view illustrating an example of the spot pattern that is formed on the virtual irradiation surface by the portable laser surface processing device of the embodiment.
FIG. 29 is a graph illustrating an example of power of each spot in the pattern in FIG. 28.
FIG. 30 is a schematic plane view illustrating an example of the spot pattern that is formed on the virtual irradiation surface by the portable laser surface processing device of the embodiment.
FIG. 31 is a schematic plane view illustrating an example of the spot pattern that is formed on the virtual irradiation surface by the portable laser surface processing device of the embodiment.
FIG. 32 is a schematic plane view illustrating an example of the spot pattern that is formed on the virtual irradiation surface by the portable laser surface processing device of the embodiment.
FIG. 33 is a schematic plane view illustrating an example of the spot pattern that is formed on the virtual irradiation surface by the portable laser surface processing device of the embodiment.
FIG. 34 is a schematic plane view illustrating an example of the spot pattern that is formed on the virtual irradiation surface by the portable laser surface processing device of the embodiment.
FIG. 35 is a schematic plane view illustrating an example of the spot pattern that is formed on the virtual irradiation surface by the portable laser surface processing device of the embodiment.
FIG. 36 is a schematic plane view illustrating an example of the spot pattern that is formed on the virtual irradiation surface by the portable laser surface processing device of the embodiment.
FIG. 37 is an exemplary and schematic side view of part of a portable laser surface processing device of an eighth embodiment.
FIG. 38 is an exemplary and schematic plane view illustrating an example of a change in an area on a surface of an object, which is an area processed by the portable laser surface processing device of the eighth embodiment.
FIG. 39 is an exemplary and schematic plane view illustrating an example of the change in the area on the surface of the object, which is an area processed by the portable laser surface processing device of the eighth embodiment.

### Description of Embodiments

Exemplary embodiments of the present invention are disclosed below. The configurations of the embodiments presented below and the functions and results (effects) brought by the configurations are examples. The present invention can be realized using a configuration other than those disclosed by the following embodiments. According to the present invention, it is possible to obtain at least one of various effects (including derivative effects) obtained by the configurations.

The following embodiments have similar components. Common reference numerals are assigned to those similar components and redundant description is sometimes omitted below.

In the present specification, ordinal numbers are assigned for convenience in order to distinguish directions, spots and a radius of a circumference along which the spots are arrayed and the positions of the spots and do not present priorities or the order and do not limit the number of elements.

It is described below that, in a pattern including a plurality of spots, when not particularly referred to, the spots have substantially the same power density. In each plane view illustrating a pattern on a virtual irradiation surface, arrangement of a plurality of spots in a state without rotation is illustrated.

### Laser Surface Processing System

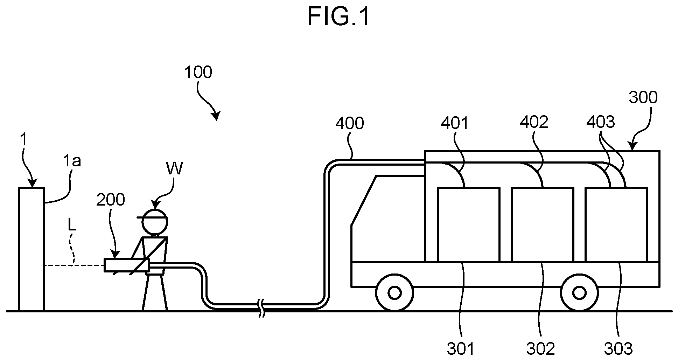

FIG. 1 is a diagram illustrating a schematic configuration of a laser surface processing system 100 of an embodiment. As illustrated in FIG. **1****,** the laser surface processing system 100 includes a portable laser surface processing device 200, an boarding apparatus 300, and a cable 400.

The portable laser surface processing device 200 applies laser light L to a surface 1a of a subject 1 to be processed. The laser light L is applied under an appropriate condition and accordingly the energy of the laser light L causes laser ablation in a site to which the laser light L is applied on the surface 1a and in the vicinity of the area and a superficial layer is removed thinly. In the removal, together with a material forming the body (base material) including the surface 1a of the subject 1, dirt and rust, a coating, a painted substance, such as paint, and the like, are removed. In other words, the portable laser surface processing device 200 is able to remove or cleans the superficial surface of the surface 1a. The subject 1 is an example of an object on which surface processing is to be performed.

The subject 1, for example, covers a wide variety of subjects, such as a building, a construction, an architectural structure, a building structure, an architectural material, a steel sheet, a bridge beam, concrete and products, parts, and objects that form them. A material that forms the subject 1 is, for example, metal, concrete, mortar, or the like, and is not limited to them.

A worker W grips and uses the portable laser surface processing device 200. The worker W is able to change the position of the portable laser surface processing device 200 by changing the position of the worker **W.** By changing the posture of the portable laser surface processing device 200, the worker W is able to change a direction in which the laser light L is output from the portable laser surface processing device 200. In other words, by changing the position and the posture of the portable laser surface processing device 200, the worker W is able to change the position where the laser light L is applied on the surface 1a and the superficial surface is removed and performs an operation to remove the superficial surface over a wide area of the surface 1a.

The boarding apparatus 300, for example, has various types of devices, such as a light source device 301, a power source device 302, and a cooling device 303. These devices are bulky and heavy and therefore are difficult to mount on the portable laser surface processing device 200. Thus, in the laser surface processing system 100, the weight and the size of the portable laser surface processing device 200 are reduced by separating the devices mounted on the boarding apparatus 300 and the portable laser surface processing device 200 from each other and connecting the boarding apparatus 300 and the portable laser surface processing device 200 via the cable 400. In a relatively large area separating from the boarding apparatus 300, the length of the cable 400 is set relatively long in order to process the surface 1a in the relatively large area distant from the boarding apparatus 300.

The boarding apparatus 300, for example, is a travel object configured to be able to travel, such as a truck (automobile or a vehicle). The boarding apparatus 300 is able to travel and thus it is possible to easily change a site on which the laser surface processing system 100 performs superficial surface removal processing. Note that the boarding apparatus 300 is not limited to an automotive and, for example, it may be a vehicle other than the automotive, such as a train, a ship, or the like. The boarding apparatus 300, for example, need not include a power source like a trailer.

The light source device 301 includes a laser oscillator and is configured to be able to output laser light of power of 6000[W] as an example. The laser oscillator is an example of a laser device. The wavelength of the laser light that the laser oscillator outputs is, for example, between 400[nm] and 120[nm] inclusive. The laser oscillator is a fiber laser oscillator of a wavelength of 1070[nm] representatively. The laser oscillator may be a semiconductor laser oscillator of a wavelength of 940[nm], a semiconductor laser oscillator of a wavelength of 450[nm], or a disk laser or a solid-state laser of a wavelength of 1064[nm].

The light source device 301 and the portable laser surface processing device 200 are optically connected via an optical fiber cable 401. The optical fiber cable 401 includes optical fibers (not illustrated in the drawings) with a core and a cladding surrounding the core. The optical fibers transmit the laser light that is output from the light source device 301 to the portable laser surface processing device 200.

The lengths of of the optical fiber cable 401 and eventually the cable 400 are set, for example, between 5[m] and 300[m] inclusive such that a relatively long distance between the light source device 301 and the portable laser surface processing device 200 is ensured for application to the subject 1 that is relatively large, such as a building, a construction, or an architectural structure. The optical density and the length of the cable enabling transmission have a trade-off relationship resulting from an energy shift caused by stimulated Raman scattering and therefore, in order to realize transmission of the laser light in such a long distance, the diameter of the core of the optical fibers is preferably 50[µm] or larger, is more preferably 80[µm] or larger, or is further preferably 100[µm] or larger.

In order to obtain a high-quality processed surface (superficial-layer-removed surface) with less inconsistency in processing and high accuracy in shape, it is important to maintain the laser light that is output from the optical fiber to the portable laser surface processing device 200 at high quality. From such a point of view, as for the specification in which the optical fibers have the aforementioned length and diameter, M² beam quality of the laser light that is output from the optical fibers is set at a predetermined value or smaller. The M² beam quality is also referred to as a M² factor.

When the optical fibers are single-mode optical fibers, the M² beam quality is set at 1.5 or smaller and, in this case, the output of the laser light is set between 300[W] and 5000[W] inclusive.

When the optical fibers are multi-mode optical fibers, the M² beam quality is set at 10 or smaller and, in this case, the output of the laser light is set between 500[W] and 2000[W] inclusive.

The power source device 302, for example, includes a battery, a power generator, etc., and supplies power necessary for each unit to operate to the portable laser surface processing device 200. Power is supplied from the power source device 302 to the portable laser surface processing device 200 via an electric cable 402.

The cooling device 303, for example, includes a tank that stores a refrigerant, such as a coolant, a pump that ejects the refrigerant, etc., and supplies the refrigerant to the portable laser surface processing device 200 to cool each unit of the portable laser surface processing device 200. The refrigerant is supplied to the portable laser surface processing device 200 from the cooling device 303 via a refrigerant tube 403.

### First Embodiment

### Portable Laser Surface Processing Device

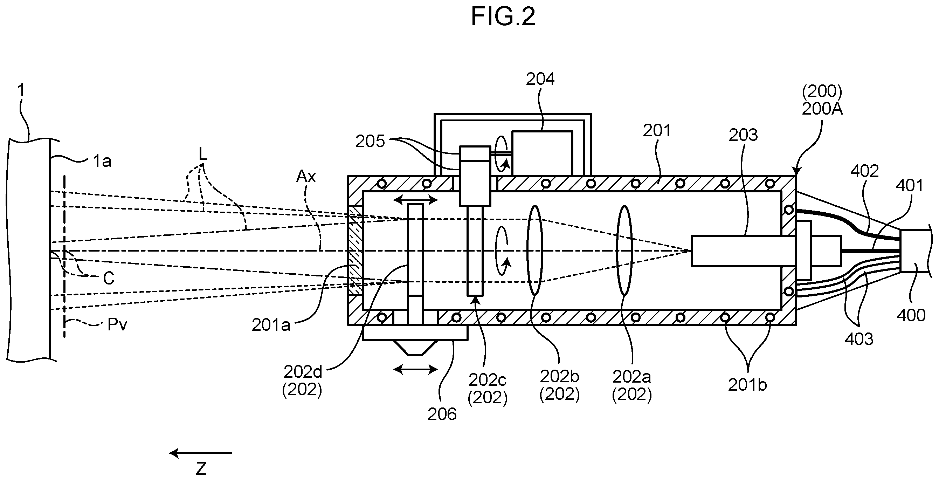

The portable laser surface processing device 200 is an optical device for appropriately applying laser light that is input from the light source device 301 via the optical fiber cable 401 to the subject 1. The laser light that is output from the portable laser surface processing device 200 is continuous waves. FIG. 2 is a cross-sectional view illustrating a schematic configuration of a portable laser surface processing device 200A (200) of a first embodiment. As illustrated in FIG. 2, the portable laser surface processing device 200 includes a casing 201, a plurality of optical components 202, a connector 203, a motor 204, a rotation transmission mechanism 205, and a slider 206.

The casing 201 has a substantially cylindrical shape and houses the optical components inside. The casing 201 also functions as a support member that supports the connector 203, the motor 204, the rotation transmission mechanism 205, the slider 206, etc., in addition to the optical components 202.

A window member 201a that transmits the laser light L that is output is attached to an end portion of the casing 201. In the casing 201, a path 201b that allows the refrigerant transmitted from the cooling device 303 via the refrigerant tube 403 to pass is provided. The refrigerant circulates via the refrigerant tube 403 between the cooling device 303 and the path 201b of the portable laser surface processing device 200. A portion of the casing 201 that forms the path 201b, the cooling device 303, and the refrigerant tube 403 are an example of a cooling mechanism that cools the casing 201 and eventually the optical components 202.

The optical components 202 are, for example, collimating lenses 202a and 202b and a diffractive optical element 202c (referred to as DOE 202c below, DOE: diffractive optical element), and an adjustment lens 202d, etc.

The collimating lenses 202a and 202b collimate the laser light that is input via the optical fibers and the connector 203. The collimated laser light is parallel light.

The DOE 202c shapes a beam of the laser light that are turned into parallel light by the collimating lenses 202a and 202b. The DOE 202c is an example of a beam shaper.

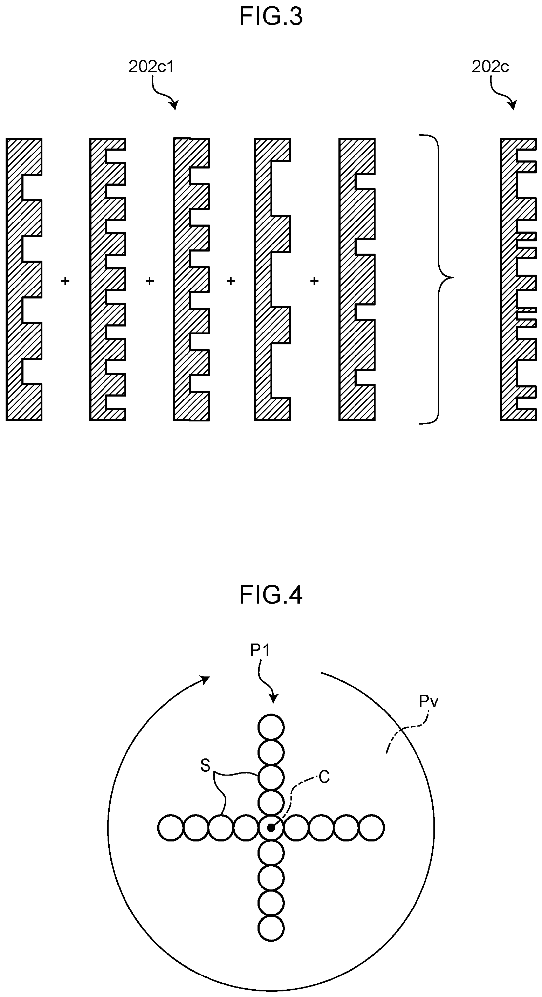

FIG. 3 is an illustrative view illustrating a concept of a principle of the DOE 202c. As exemplified conceptually, the DOE 202c, for example, has a configuration in which a plurality of diffraction gratings 202c1 with different pitches are superimposed. The DOE 202c is able to form a beam shape by bending the parallel light to a direction on which the diffraction gratings 202c1 have an effect and overlaps the parallel light.

With a beam shaper like the DOE 202c, the laser light is divided into a plurality of beams of which power is adjusted appropriately in the portable laser surface processing device 200. The laser light L with the beams is output from the portable laser surface processing device 200 in a Z-direction toward the surface 1a and a plurality of spots are formed by the beams on the surface 1a. Note that the spots may be separate from each other or may be connected. The Z-direction is a direction in which the laser light L from the portable laser surface processing device 200 is output and is an example of a first direction.

The adjustment lens 202d is a condenser lens or a diffuser lens. The adjustment lens 202d is attached to the casing 201 such that the position along an optical axis Ax is changeable. Specifically, for example, the adjustment lens 202d is configured such that its position is changeable with the slider 206 that can be operated manually outside the casing 201. Note that that an actuator that operates electrically may adjust the position of the adjustment lens 202d.

The adjustment lens 202d is attached to the casing 201 such that the adjustment lens 202d is replaceable. Specifically, for example, a sub-assembly in which the slider 206 and the adjustment lens 202d are integrated is attached to the casing 201 such that the sub-assembly is replaceable.

In the present embodiment, such a configuration makes it possible to, as illustrated in FIG. 2, increase or reduce the laser light L that is output from the portable laser surface processing device 200 and eventually adjust the size of the spots that are formed on the surface 1a.

In the present embodiment, the example where the adjustment lens 202d serving as the optical component 202 is attached to the casing 201 such that the adjustment lens 202d is replaceable (detachable) is presented as an example, and the optical component 202 different from the adjustment lens 202d, such as the DOE 202c or the collimating lenses 202a and 202b, may be attached to the casing 201 such that the optical component 202 is replaceable (detachable).

The DOE 202c is attached to the casing 201 such that the DOE 202c is rotatable on a rotation center parallel to the optical axis Ax while the laser light L is being output. In the present embodiment, power supplied from the power source device 302 via the electric cable 402 causes a rotor of the motor 204 to rotate, the rotation of the rotor is transmitted to the DOE 202c via the rotation transmission mechanism 205, and accordingly the DOE 202c rotates. In this case, the rotation center of the DOE 202c may substantially overlap the optical axis Ax and may separate from the optical axis Ax. The motor 204 and the rotation transmission mechanism 205 are an example of a rotation mechanism and is an example of a moving mechanism that causes the DOE 202c to move with respect to the casing 201. The rotation transmission mechanism 205 is also referred to as a deceleration mechanism. Note that the motor 204 is an electric motor in the present embodiment; however, the motor 204 is not limited to this, and the motor 204 may be an air motor. In that case, compressed air that is supplied from an air supply device (not illustrated in the drawings) serving as a device mounted on the boarding apparatus 300 via an air tube (not illustrated in the drawings) housed in the cable 400 causes the motor 204 serving as an air motor to operate.

### Spot Pattern

The rotation of the DOE 202c described above causes the spots of the laser light L to rotate on a rotation center C on the surface 1a and on a virtual irradiation surface Pv (refer to FIG. 2) that is separate from the portable laser surface processing device 200 in the Z-direction, that intersects with the Z-direction, and that is orthogonal to the Z-direction.

The surface 1a of the actual subject 1 is not necessarily a plane surface and is not necessarily orthogonal to the Z-direction. For this reason, it is sometimes difficult to specify a configuration and arrangement of the spots on the surface 1a. For this reason, in the present embodiment, the shape and arrangement of the spots of the laser light L are specified on the virtual irradiation surface Pv that is orthogonal to the Z-direction, that is, the direction in which the laser Light L is output and that is separate from the portable laser surface processing device 200. In other words, the virtual irradiation surface Pv is a virtual plane for specifying the configuration and arrangement of the spots of the laser light L, and the virtual irradiation surface Pv can be also referred to as an identifying plane or a detection plane. By making a comparison in the configuration and arrangement of the spots that are formed by the laser light L on the virtual irradiation surface Pv, it is possible to determine matching and mismatching in the configuration and arrangement of the spots between the portable laser surface processing device of the present embodiment and another portable laser surface processing device. The virtual irradiation surface Pv may be defined as a plane that is provided in a position separate from the portable laser surface processing device 200 by a distance serving as the center of a design range of the distance between the portable laser surface processing device 200 and the surface 1a or may be defined as a plane that is provided in a position partially overlapping the surface 1a.

According to the present embodiment, the DOE 202c serving as a beam shaper diverges the laser light into a plurality of beams and furthermore the DOE 202c is rotated, which makes it possible to rotate spots corresponding to the beams on the surface 1a and increase the area of areas that can be processed concurrently on the surface 1a. It is also possible to obtain an advantage that it is possible to set lower an energy density in each position on the surface 1a and attenuate a thermal effect on an area deeper than the superficial layer to be processed. When the subject is metal, there is an effect that it is possible to remove a coating and at the same time inhibit formation of a surface oxide film caused by a thermal effect and enable both a processing speed of removal of a coating and rust and quality that are requested. Furthermore, in a pattern including a plurality of spots according to an appropriate setting in the DOE 202c, it is possible to arrange the spots and set power of each spot appropriately, which makes it possible to set the power of each spot appropriately and accordingly it is possible to inhibit variation in the power density distribution on the surface 1a and inhibit variation of the processed surface and processing inconsistency. Note that, when a single spot caused by a single beam is rotated only without divergence of the beam, it is difficult to inhibit processing inconsistency.

FIG. 4 is a plane view exemplifying a pattern P1 of the spots S that is formed on the virtual irradiation surface Pv. As illustrated in FIG. 4, the pattern P1 includes a plurality of spots S that are distant from the rotation center C differently as spots S of a plurality of beams of the laser light L. The spots S are arranged in a substantially cross shape in a planar view with respect to the virtual irradiation surface Pv. The spots S have the same power and size.

In association with rotation of the DOE 202c, the pattern P1 rotates on the rotation center C on the virtual irradiation surface Pv at a substantially constant angular rate over time. Accordingly, the spots S of the beams of which power density is adjusted appropriately by the DOE 202c rotate and thus, for example, compared to the case where the spot of one beam of which power density is not particularly adjusted on the surface 1a rotates, it is possible to inhibit variation in power density on the surface 1a according to the site and eventually variation in the processing state of the surface 1a according to the site.

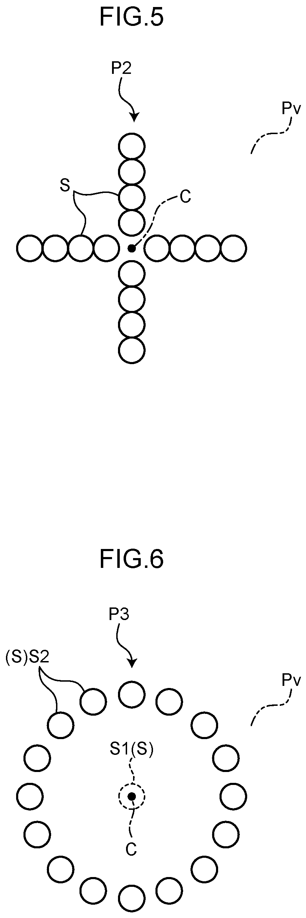

FIG. 5 is a plane view exemplifying a pattern P2 of the spots S that is formed on the virtual irradiation surface Pv. The pattern P2 illustrated in FIG. 5 also rotates on the rotation center C at a constant angular rate. The pattern P2 is the same as the pattern P1 except that the spot S overlapping the rotation center C is not present. In other words, in the case in FIG. 5, the beams of the laser light L form the spots S that are separate from the rotation center C on the virtual irradiation surface Pv and does not form an overlapping the rotation center **C.** In the case of the pattern P1, while the spots S intermittently pass the respective positions in the area separate from the rotation center C on the surface 1a in association with the rotation of the pattern P1 on the rotation center C and the beams of the laser L are applied intermittently, the spot S remains in the vicinity of the rotation center C and thus the beam of the laser light L is applied continuously. For this reason, on the surface 1a, the processing progresses in the area in which the rotation center C is positioned compared to the area that is separate from the rotation center C, which leads to a risk that a difference in the processing state on the surface 1a according to the site will increase. In this respect, when the spot S overlapping the rotation center C is not present as in the pattern P2 in FIG. 5, it is possible to inhibit the beams of the laser light from being applied in the vicinity of the rotation center C and eventually inhibit the difference in the processing state on the surface 1a according to the site from increasing. Note that, practically, the situation where the rotation center C does not move at all hardly occurs and thus, in the case of the pattern P2, it almost never occurs that the beam of the laser light L is not applied locally and a site where surface processing is not performed almost never occurs.

FIG. 6 is a plane view exemplifying a pattern P3 of the spots S that is formed on the virtual irradiation surface Pv. The pattern P3 illustrated in FIG. 6 also rotates on the rotation center C at a constant angular rate. The pattern P3 includes a spot S1(S) overlapping the rotation center C and a plurality of spots S2(S) that are arranged on a circumference with a predetermined radius on the rotation center C. In the pattern P3, the power of the spots S2 is set equal and the power of the spot S1 is set lower than that of the spot S2. In other words, in the case in FIG. 6, the beams of the laser light L form the spots S2 that are separate from the rotation center C on the virtual irradiation surface Pv and form the spot S1 that overlaps the rotation center C and of which power is lower than that of the spots S2. In this case, it is possible to inhibit the power density from excessively increasing compared to the area that is separate from the rotation center C in the vicinity of the rotation center C and inhibit the power density from being 0 in the vicinity of the rotation center C and accordingly it is possible to further inhibit variation in the processing state of the surface 1a according to the site.

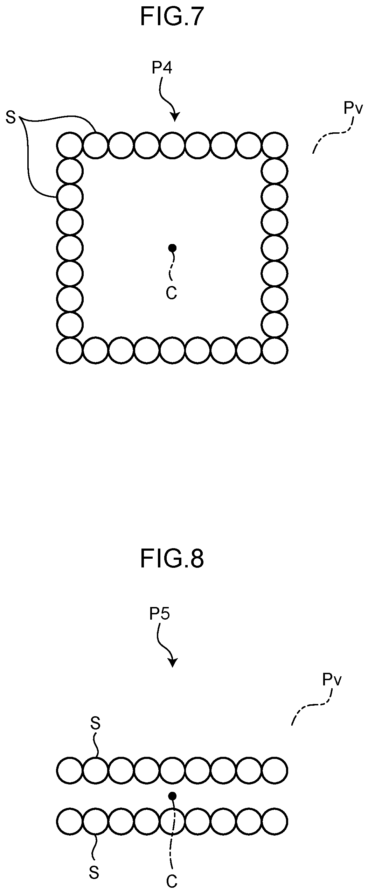

FIG. 7 is a plane view exemplifying a pattern P4 of the spots S that is formed on the virtual irradiation surface Pv. The pattern P4 illustrated in FIG. 7 also rotates on the rotation center C at a constant angular rate. The pattern P4 includes the spots S that are arranged along the sides of a square surrounding the rotation center C.

FIG. 8 is a plane view exemplifying a pattern P5 of the spots S that is formed on the virtual irradiation surface Pv. The pattern P5 illustrated in FIG. 8 also rotates on the rotation center C at a constant angular rate. The pattern P5 includes the spots S that are arranged along two parallel line segments with the rotation center C in between.

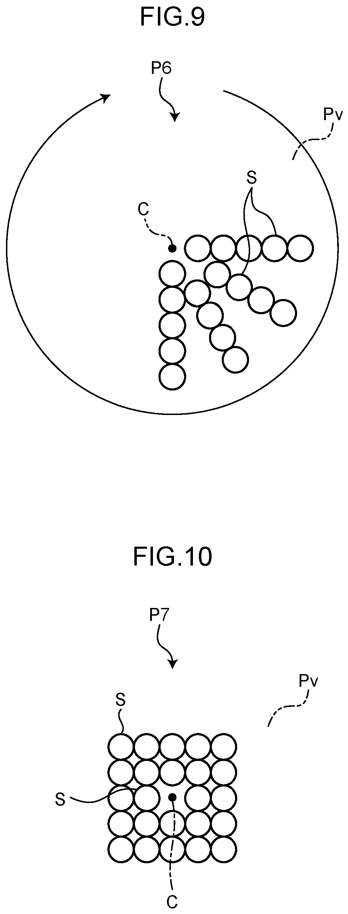

FIG. 9 is a plane view exemplifying a pattern P6 of the spots S that is formed on the virtual irradiation surface Pv. The pattern P6 illustrated in FIG. 9 also rotates on the rotation center C at a constant angular rate. The pattern P6 includes the spots S that are arranged along a plurality of line segments extending radially from the rotation center C. In the patterns P1 to P5 illustrated in FIGS. 4 to 8, the rotation center C is positioned at the geometric center of the sports S and, in the pattern P6 illustrated in FIG. 9, the rotation center C is positioned apart from the geometric center of the spots S.

FIG. 10 is a plane view exemplifying a pattern P7 of the spots S that is formed on the virtual irradiation surface Pv. The pattern P7 illustrated in FIG. 10 also rotates on the rotation center C at a constant angular rate. The pattern P7 illustrated in FIG. 10 includes the spots S that are arranged in a matrix within a square area.

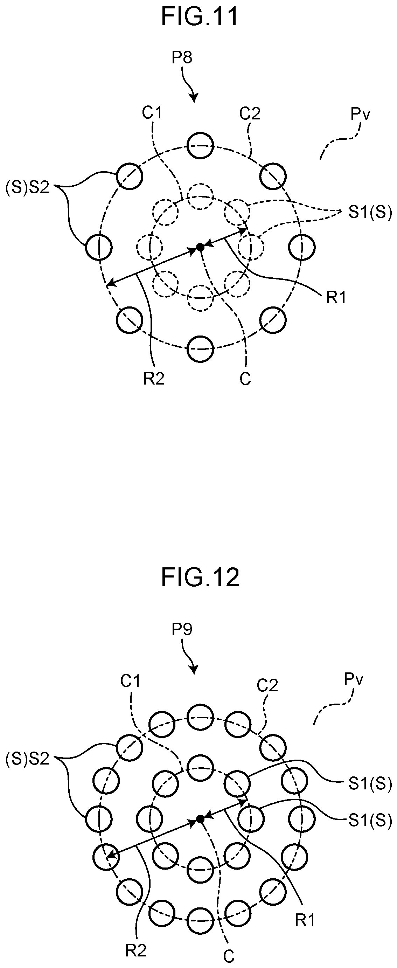

FIG. 11 is a plane view exemplifying a pattern P8 of the spots S that is formed on the virtual irradiation surface Pv. The pattern P8 illustrated in FIG. 11 also rotates on the rotation center C at a constant angular rate. The pattern P8 illustrated in FIG. 11 includes the spots S1 that are positioned on a circumference C1 with a radius R1 from the rotation center C and the spots S2 that are positioned on a circumference C2 with a radius R12 from the rotation center C that is longer than the radius R1. In the pattern P8, the number of the spots S1 and the number of the spots S2 are equal to each other. On the circumference C2, a rate at which the spots S travel in association with the rotation on the rotation center C is higher than that on the circumference C1. For this reason, if the same number of the spots S with the same power are arranged on both the circumference C1 and the circumference C2, the power density in each position on the circumference C2 will be lower than the power density in each position on the circumference C1. Thus, in the pattern P8, the power of the spots S2 is set higher than the power of the spots S1. This makes it possible to reduce the difference between the power density of the area where the spots S1 travel on the surface 1a and the power density of the area where the spots S2 travel and eventually inhibit variation in the processing state of the surface 1a according to the site. The spot S1 is an example of a first spot and the spot S2 is an example of a second spot. The radius R1 is an example of a first radius and the radius R2 is an example of a second radius.

FIG. 12 is a plane view exemplifying a pattern P9 of the spots S that is formed on the virtual irradiation surface Pv. The pattern P9 illustrated in FIG. 12 also rotates on the rotation center C at a constant angular rate. Like the pattern P8 in FIG. 8, the pattern P9 includes the spots S1 that are positioned on the circumference C1 with the radius R1 from the rotation center C and the spots S2 that are positioned on the circumference C2 with the radius R2 from the rotation center C that is longer than the radius R1. Note that, in the pattern P9, the power of the spot S1 and the power of the spot S2 are equal. Also in this case, on the circumference C2, a rate at which the spots S travel in association with the rotation on the rotation center C is higher than that on the circumference C1. For this reason, if the same number of the spots S with the same power are arranged on both the circumference C1 and the circumference C2, the power density in each position on the circumference C2 will be lower than the power density in each position on the circumference C1. Thus, in the pattern P8, the number of the spots S2 is set higher than the number of the spots S1. This makes it possible to reduce the difference between the power density of the area where the spots S1 travel on the surface 1a and the power density of the area where the spots S2 travel and eventually inhibit variation in the processing state on the surface 1a according to the site.

Note that each of the patterns P4 to P9 of the examples in FIGS. 7 to 12 may have the spot S overlapping the rotation center C and the power of the spot S may be lower than the power of the spot S that is separate from the rotation center **C.**

As described above, according to the present embodiment, for example, it is possible to obtain the portable laser surface processing device 200 that is improved and new and that makes it possible to further reduce variation in the processing state according to the site and processing inconsistency.

### Second Embodiment

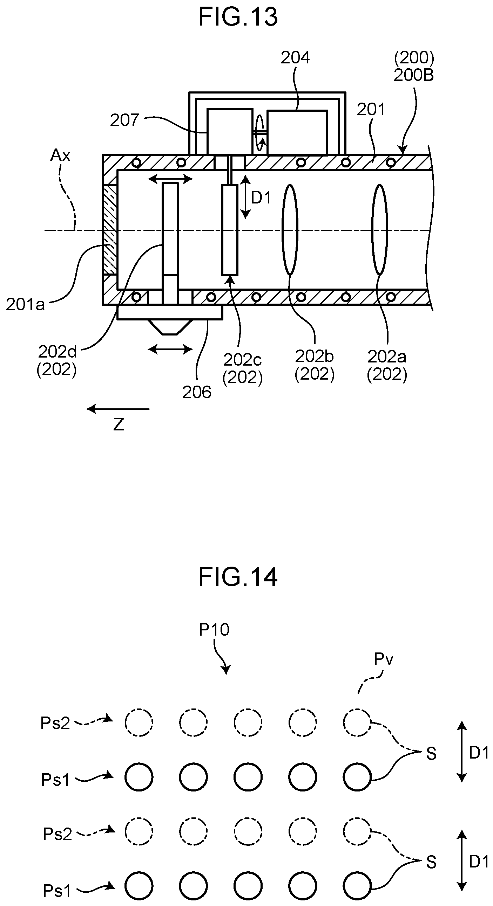

FIG. 13 is a cross-sectional view illustrating a schematic configuration of part of a portable laser surface processing device 200B (200) of a second embodiment. The portable laser surface processing device 200B of the present embodiment is different from the portable laser surface processing device 200A in including a rotation-linear motion conversion mechanism 207 instead of the rotation transmission mechanism 205 (refer to FIG. 2). The rotation-linear motion conversion mechanism 207 is, for example, a crank mechanism and converts rotation of the motor 204 into reciprocating linear motion in a direction D1 intersecting with an optical axis Ax. Accordingly, the DOE 202c reciprocates with respect to the casing 201 and in the direction D1 intersecting with the optical axis Ax. The motor 204 and the rotation-linear motion conversion mechanism 207 are an example of a reciprocation mechanism and is an example of a moving mechanism that causes the DOE 202c to move with respect to the casing 201. Note that the reciprocating linear motion mechanism may be another mechanism, such as a linear motion actuator, or a mechanism that causes the DOE 202c to swing reciprocally (reciprocating swing mechanism).

FIG. 14 is a plane view exemplifying a pattern P10 of spots S that is formed on a virtual irradiation surface Pv by laser light L that is output from the portable laser surface processing device 200B. The reciprocating linear motion of the DOE 202c causes a plurality of the spots S of the pattern P10 to reciprocate linearly in the direction D1 between a position Ps1 and a position Ps2. In this case, the pattern P10 includes a plurality of (two in this example) lines of the spots S that are arranged in a direction intersecting with the direction D1. Accordingly, it is possible to inhibit the spots S from remaining in a specific site on the surface 1a and extend an area irradiated with the spots S and reduce the difference in power density according to the site and eventually inhibit variation in the processing state on the surface 1a according to the site. The position Ps1 is an example of a first position and the position Ps2 is an example of a second position.

Also according to the present invention where the DOE 202c reciprocates, it is possible to obtain the same effect as that of the above-described first embodiment where the DOE 202c rotates.

### Third Embodiment

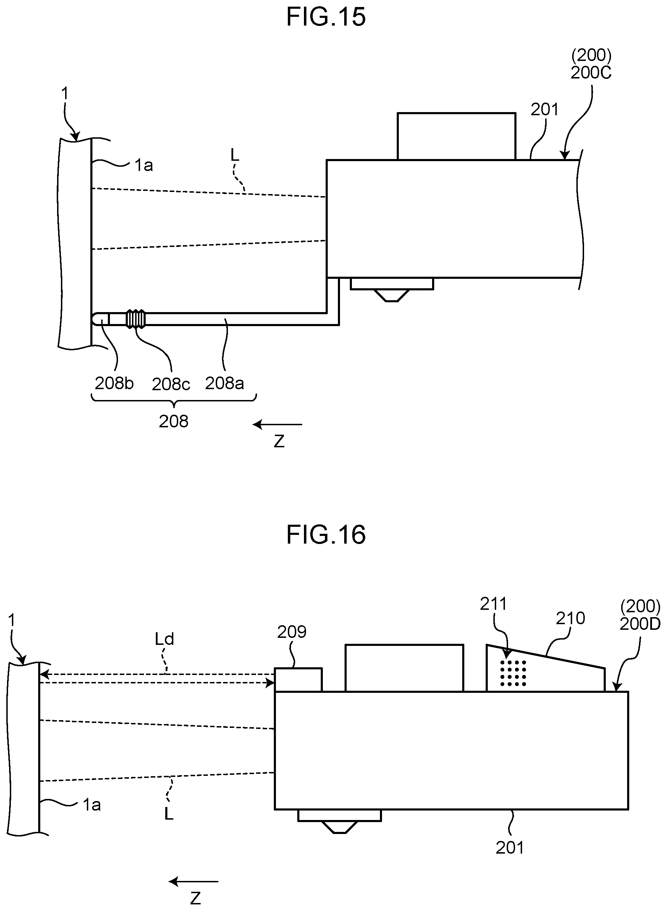

FIG. 15 is a side view illustrating a schematic configuration of part of a portable laser surface processing device 200C (200) of a third embodiment. The portable laser surface processing device 200C of the present embodiment includes a guide 208 that extends from the casing 201 to the surface 1a and that is configured such that to be able to make a contact with the surface 1a. The guide 208 includes an extending portion 208a, a contact portion 208b, and a stretching portion 208c. The extending portion 208a is fixed to the casing 201, has a rod-like shape, and extends from the casing 201 in the Z-direction. The contact portion 208b is positioned at a distal end of the guide 208 and, for example, is made of a relatively soft material that is flexible, such as elastomer. The stretching portion 208c has an elastic member and a cover that covers the elastic member, is configured to be stretchable in the Z-direction between the extending portion 208a and the contact portion 208b, and is configured to be elastically deformable also in a direction intersecting with the Z-direction. The stretching portion 208c is also referred to as an absorber.

According to such a configuration, the worker W grips the portable laser surface processing device 200C with the contact portion 208b making a contact with the surface 1a and performs processing, thereby easily maintaining the distance between the portable laser surface processing device 200C and the surface 1a substantially constant. Accordingly, it is possible to inhibit the difference in power density on the surface 1a according to a change in the distance and eventually inhibit variation in the processing state of the surface 1a according to the site.

### Fourth Embodiment

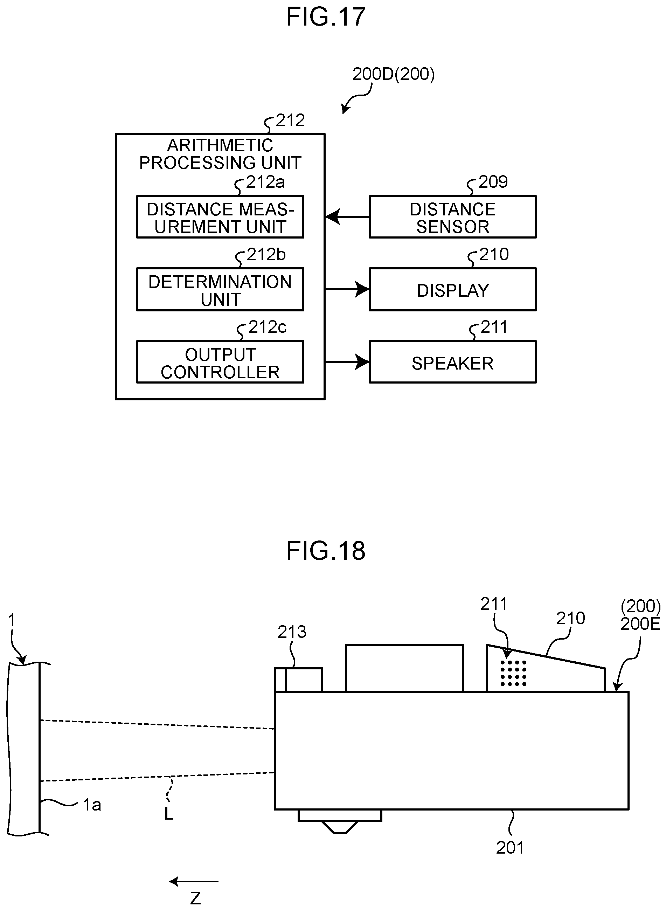

FIG. 16 is a side view illustrating a schematic configuration of part of a portable laser surface processing device 200D (200) of a fourth embodiment. FIG. 17 is a block diagram of the portable laser surface processing device 200D. As illustrated in FIG. 16 and FIG. 17, the portable laser surface processing device 200D includes a distance sensor 209, a display 210, a speaker 211, and an arithmetic processing unit 212. The arithmetic processing unit 212, for example, is configured as a computer (circuitry) including a CPU (central processing unit) that operates according to a program, a RAM (random access memory), a ROM (read only memory), and a SSD (solid state drive) and includes a distance measurement unit 212a, a determination unit 212b, and an output controller 212c.

The distance sensor 209 is, for example, a contactless laser displacement meter and detects a distance from the distance sensor 209 to the surface 1a by outputting and receiving laser light Ld for measurement. The distance measurement unit 212a measures a distance between the portable laser surface processing device 200D and the surface 1a from a detection signal from the distance sensor 209. The distance sensor 209 and the distance measurement unit 212a are an example of a distance measurement mechanism. This enables a safe interlock function that makes it possible to stop irradiation with laser when a subject other than the surface is targeted unintentionally.

The determination unit 212b determines whether the distance measured by the distance measurement unit 212a is within a predetermined range.

The output controller 212c controls a display output made by the display 210 or an audio output made by the speaker 211. The output controller 212c, for example, is able to control the display 210 to make a display output of the distance measured by the distance measurement unit 212a or control the speaker 211 to make an audio output of the distance measured by the distance measurement unit 212a. When the determination unit 212b determines that the distance measured by the distance measurement unit 212a is out of a predetermined range, the output controller 212c, the output controller 212c is able to control the display 210 to make a display output representing a predetermined alert or control the speaker 211 to make an audio output representing a predetermined alert. The output controller 212c and the display 210 are an example of a display mechanism. The determination unit 212b, the output controller 212c, the display 210, and the speaker 211 are an example of an alert output mechanism.

According to such a configuration, a display output or an audio output allows the worker W to recognize that the distance between the portable laser surface processing device 200D and the surface 1a is out of the predetermined range and recognize itself from the fact. Thus, the worker W easily maintains the state where the distance is within the predetermined range and it is possible to apply laser light L with an intended power density to the surface 1a and easily obtain an intended processing state and it is possible to inhibit variation in a processing state of the surface 1a according to the site.

### Fifth Embodiment

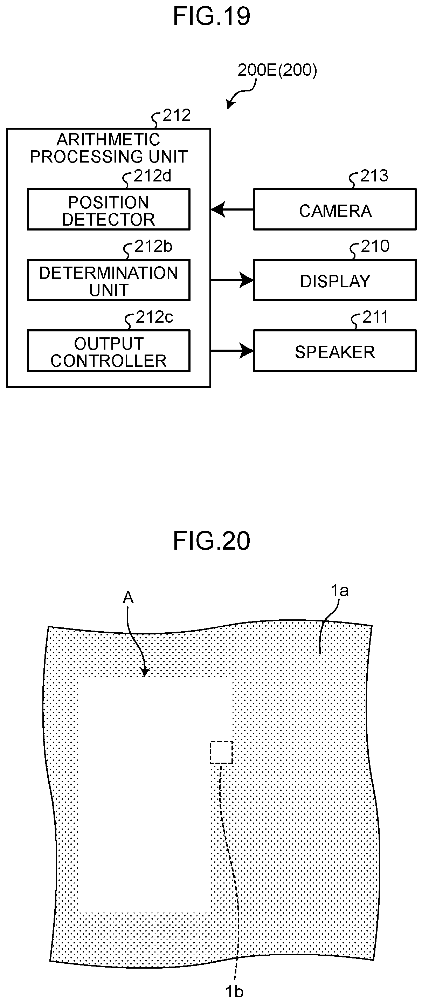

FIG. 18 is a side view illustrating a schematic configuration of part of a portable laser surface processing device 200E (200) of a fifth embodiment. FIG. 19 is a block diagram of the portable laser surface processing device 200E. As illustrated in FIG. 18 and FIG. 19, the portable laser surface processing device 200E includes a camera 213, the display 210, the speaker 211, and the arithmetic processing unit 212. The arithmetic processing unit 212, for example, is configured as a computer (circuitry) including a CPU that operates according to a program, a RAM, a ROM, and a SSD and includes a position detector 212d, the determination unit 212b, and the output controller 212c.

The camera 213, for example, acquires an image of visible light. The position detector 212d detects a processing position on the surface 1a based on an image of the camera 213. FIG. 20 is a plane view illustrating a processed area A on the surface 1a. The position detector 212d is able to discriminate between the processed area A that has been processed by the portable laser surface processing device 200 and an unprocessed area (the area presented in a dotted pattern). In other words, the position detector 212d is able to detect the processed area A. For example, by making a comparison with an image in the past, the position detector 212d is able to detect a processing position 1b at present as a site where the processed area A varies, that is, a site of extension. The camera 213 and the position detector 212d are an example of a position detection mechanism.

The determination unit 212b compares the current processing position 1b that is detected by the position detector 212d and the processed position in the past and determines whether an amount of change in the processing position 1b over time, for example, an amount of change per unit of time is smaller than a predetermined amount.

When the determination unit 212b determines that the amount of change in the processing position 1b over time is smaller than a predetermined amount, the output controller 212c is able to control the display 210 to make a display output representing a predetermined alert or is able to control the speaker 211 to make an audio output representing a predetermined alert. The determination unit 212b, the output controller 212c, the display 210, and the speaker 211 are an example of an alert output mechanism.

According to such a configuration, because an alert output allows the worker W to recognize the situation that the processing position 1b of processing performed by the portable laser surface processing device 200E remains in the same position, it is possible to change the position and the posture of the portable laser surface processing device 200E such that the processing position 1b moves appropriately. Thus, according to the present embodiment, it is possible to inhibit the processing position 1b from remaining in the same position and eventually inhibit variation in the processing state of the surface 1a according to the site.

### Sixth Embodiment

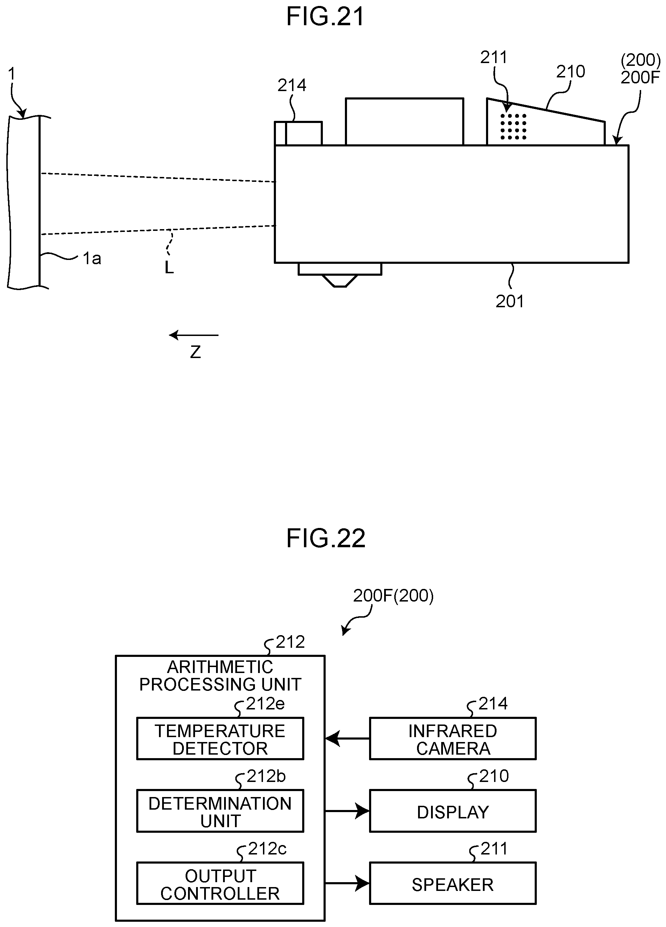

FIG. 21 is a side view illustrating a schematic configuration of part of a portable laser surface processing device 200F (200) of a sixth embodiment. FIG. 22 is an block diagram of the portable laser surface processing device 200F. As illustrated in FIGS. 21 and 22, the portable laser surface processing device 200F includes an infrared camera 214, the display 210, the speaker 211, and the arithmetic processing unit 212. The arithmetic processing unit 212 is configured as a computer (circuitry) including a CPU that operates according to the program, a RAM, a ROM, and an SSD and includes a temperature detector 212e, the determination unit 212b, and an output controller 212c.

Based on an image that is acquired by the infrared camera 214, the temperature detector 212e detects a temperature in a measurement area including the area irradiated with the laser light on the surface 1a.

The determination unit 212b determines whether the highest temperature of the surface 1a that is detected by the temperature detector 212e is larger than a predetermined temperature.

When it is determined by the determination unit 212b that the highest temperature of the surface 1a that is detected by the temperature detector 212e is larger than the predetermined temperature, the output controller 212c is able to control the display 210 that makes a display output representing a predetermined alert or control the speaker 211 to make an audio output representing the predetermined alert. The determination unit 212b, the output controller 212c, the display 210, and the speaker 211 are an example of the alert output mechanism.

According to such a configuration, the output of the alert allows the worker W to recognize a situation in which the temperature of the surface 1a is excessively high locally, that is, the situation in which the position of processing performed by the portable laser surface processing device 200F remains in the same position and thus the worker W is able to change the position and the posture of the portable laser surface processing device 200E such that the processing position 1b shifts appropriately. Thus, according to the present embodiment, it is possible to inhibit the processing position 1b from remaining in the same position and eventually inhibit variation in the processing state of the surface 1a according to the site.

### Seventh Embodiment

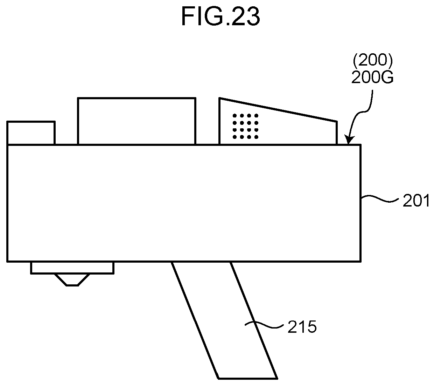

FIG. 23 is a side view illustrating a schematic configuration of a portable laser surface processing device 200G (200) of a seventh embodiment. As illustrated in FIG. 23, the portable laser surface processing device 200G includes a grip 215 that protrudes from the casing 201 (cylinder). The grip 215 allows the worker W to easily grip the portable laser surface processing device 200G and eventually the laser light L is easily applied to an intended position. Accordingly, it is possible to inhibit variation in the processing state of the surface 1a according to the site. In the case where the grip 215 protrudes from the casing 201 and the portable laser surface processing device 200G has a substantially T-shape or substantially L-shape appearance overall in a side view, which sometimes makes it possible to apply the laser light L also to an area to which the laser light L does not reach when the grip 215 does not protrude from the casing 201 and is in a shape forming a substantially I-shape appearance.

In the portable laser surface processing device 200G of the present embodiment, the the casing 201 (cylinder) and the grip 215 may be connected such that the angle therebetween is changeable, that is, the casing 201 and the grip 215 are foldable. The grip 215, for example, may be configured as a flexible arm and thus the grip 215 may be configured bendable. Furthermore, in the portable laser surface processing device 200G, a plurality of angles or a freely-selected angle may be set for the angle at which the casing 201 and the grip 215 are folded and a plurality of shapes or a freely-selected shape may be set for the shape in which the grip 215 bends. In this case, by adjusting the angle and the shape appropriately in use, the worker W is able to apply the laser light L to an area to which the laser light L does not reach in the case of the configuration in which the casing 201 and the grip 215 are fixed and the configuration in which the grip 215 is not deformable.

### Modification of Spot Pattern

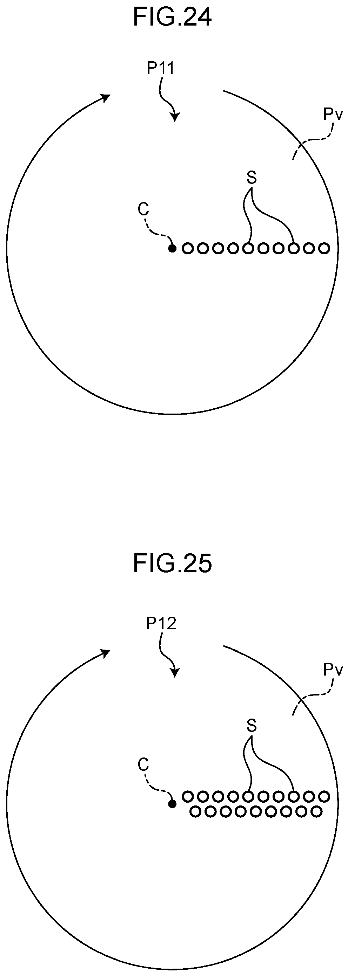

FIG. 24 is a plane view exemplifying a pattern P11 of the spots S that is formed on the virtual irradiation surface Pv. As illustrated in FIG. 24, the patter P11 includes a plurality of the spots S that are distant from the rotation center C differently as the spots S of a plurality of beams of the laser light **L.** The spots S are arranged on a straight line at predetermined intervals substantially along a radial direction on the rotation center C in a plane view with respect to the virtual irradiation surface Pv. The spots S have the same power and the same size. Also in this case, in association with rotation of the DOE 202c, the spots S rotate on the rotation center C on the virtual irradiation surface Pv at a substantially constant angular rate over time.

FIG. 25 is a plane view exemplifying a pattern P12 of the spots S that is formed on the virtual irradiation surface Pv. As illustrated in FIG. 25, the patter P12 includes a plurality of the spots S that are distant from the rotation center C differently as the spots S of the beams of the laser light **L.** The spots S are alternately arranged in two lines at predetermined intervals substantially along the radial direction on the rotation center C in a plane view with respect to the virtual irradiation surface Pv. The spots S have the same power and the same size. Also in this case, in association with rotation of the DOE 202c, the spots S rotate on the rotation center C on the virtual irradiation surface Pv at a substantially constant angular rate over time.

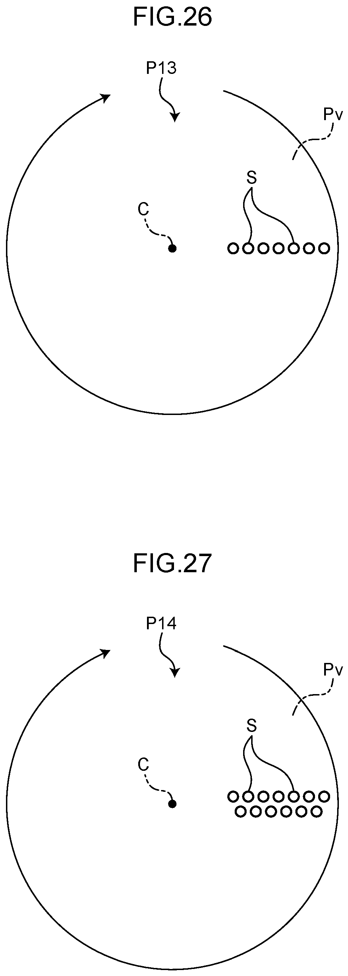

FIG. 26 is a plane view exemplifying a pattern P13 of the spots S that is formed on the virtual irradiation surface Pv. The patter P13 includes only a plurality of the spots S that are distant from the rotation center C by a predetermined distance or more among the spots S included in the pattern P11 illustrated in FIG. 24. In other words, the pattern P13 does not include the spots S close to the rotation center **C.**

FIG. 27 is a plane view exemplifying a pattern P14 of the spots S that is formed on the virtual irradiation surface Pv. The patter P14 includes only a plurality of the spots S that are distant from the rotation center C by a predetermined distance or more among the spots S included in the pattern P12 illustrated in FIG. 25. In other words, the pattern P14 does not include the spots S close to the rotation center **C.**

In these patterns P11 to P14, the spots are arranged at intervals. According to the patterns P11 to P14, further reducing the number of divisions of the spots S compared to the case where the spots S are arranged closely to each other and setting the power of each of the spots S more intense lead to the same effect as that of the case where the spots S are arranged closely to each other.

The patterns P12 and P14 include a plurality of lines as lines of the spots S that are arranged at predetermined intervals in the radial direction and the spots S are arranged alternately in the lines. In other words, the positions of the spots S in the radial direction mismatch between the lines. In this case, between circumferential trajectories of two spots adjacent to each other in one line, a circumferential trajectory of the spot S in a line adjacent to the line is arranged, which makes it possible to further inhibit variation in power density on the surface 1a according to the site and eventually variation in the processing state of the surface 1a according to the site.

Note that the power of the spots S may be set such that the power increases as it separates from the rotation center **C.** In this case, the power of the spots S may be set such that the power gradually increases as it separates from the rotation center C or is proportional to the distance from the rotation center **C.** This makes it possible to inhibit the power density from decreasing in the circumferential trajectories as the distance from the rotation center C increases and thus it is possible to further inhibit variation in power density on the surface 1a according to the site and eventually variation in the processing state of the surface 1a according to the site.

FIG. 27 is a plane view exemplifying a pattern P14 of the spots S that is formed on the virtual irradiation surface Pv. The patter P14 includes only a plurality of the spots S that are distant from the rotation center C by a predetermined distance or more among the spots S included in the pattern P12 illustrated in FIG. 25. In other words, the pattern P14 does not include the spots S close to the rotation center **C.**

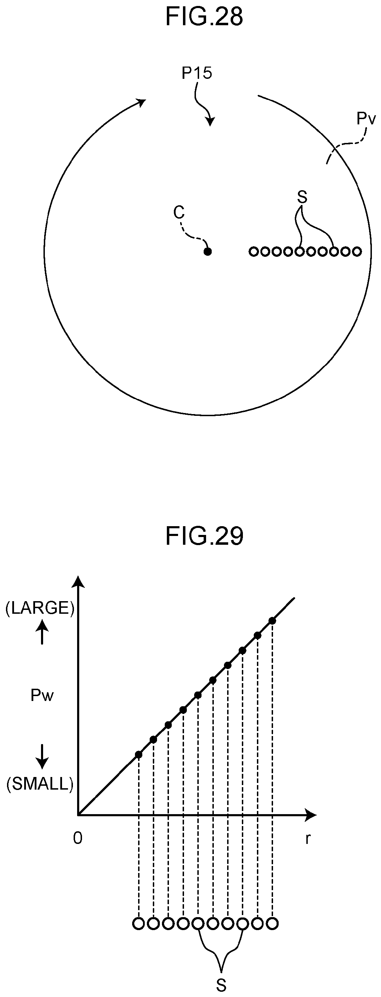

FIG. 28 is a plane view exemplifying a pattern P15 of the spots S that is formed on the virtual irradiation surface Pv. The patter P15 includes a plurality of the spots S like the pattern P13 illustrated in FIG. 26. Note that the pattern P15 includes the larger number of the spots than that of the pattern P13. Note that the number of the spots S is not limited to the examples in FIG. 26 and FIG. 28.

FIG. 29 is a graph illustrating an example of power of each spot in the pattern P15 in FIG. 28. In the pattern P15 in FIG. 28, as described above, the power of the spots S is set such that the power gradually increases as it separates from the rotation center C and is set such that the power increases in proportion to a distance r from the rotation center **C.** FIG. 29 illustrates a specific example of the setting. This makes it possible to further inhibit variation in power density on the surface 1a according to the site and eventually variation in the processing state of the surface 1a according to the site. According to the studies made by the inventers, it has been proved that the pattern P15 in FIG. 28 and the setting of power like that in FIG. 29 enable the best result.

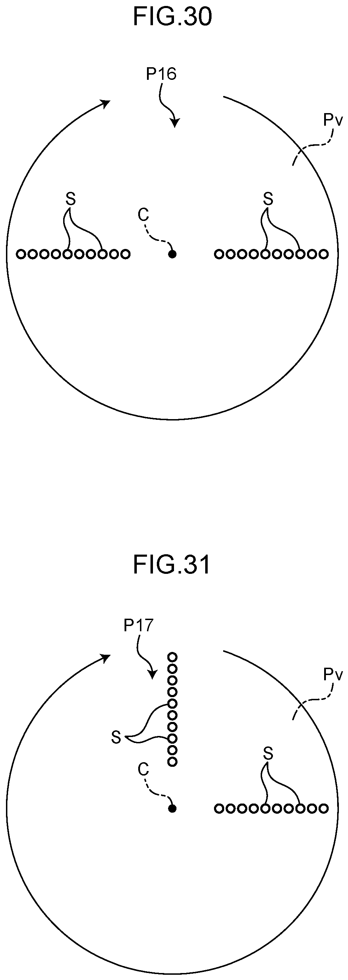

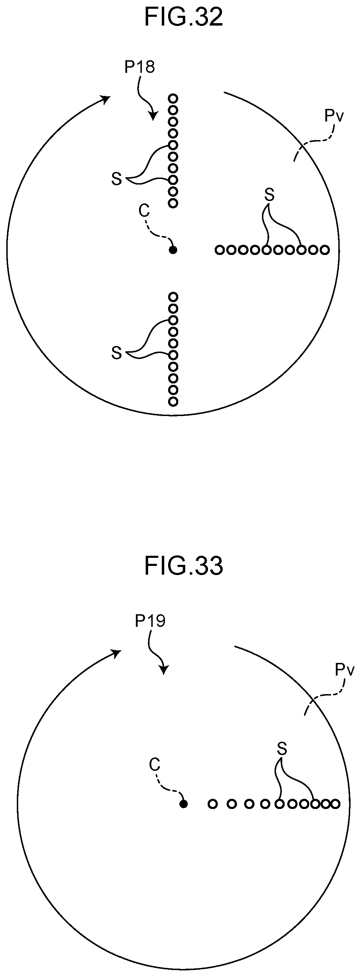

FIGS. 30 to 32 are plane views exemplifying patterns P16 to P18 that are different from the patterns already described. Each of these patterns P16 to P18 includes a plurality of the spots S rotating on the rotation center C and includes the spots S with different distances from the rotation center **C.** In these patterns P16 to P18, the spots S are arranged in an I shape with the rotation center C in between (FIG. 30), in an L shape with the rotation center C serving as the corner (FIG. 31), and in a T shape with the rotation center C serving as the intersection (FIG. 32). Also in these patters P16 to P18, the spots S are not arranged in the vicinity of the rotation center C in order to prevent excessive supply of energy to the vicinity of the rotation center **C.** Note that a pattern in a substantially cross shape like that in FIG. 5 may be formed using sets of similar numbers of the spots S.

FIG. 33 is a plane view exemplifying a pattern P19 of the spots S that is formed on the virtual irradiation surface Pv. The pattern P19 also includes a plurality of the spots S that rotate on the rotation center C and includes a plurality of the spots S with different distances from the rotation center **C.** Note that, in the pattern P19, the interval between the adjacent spots S is shorter as it separates from the rotation center **C. In** other words, the pattern P19 includes the spot S that is close to the rotation center C and has a long interval between the spot S and a spot adjacent to the spot and includes the spot S that is distant from the rotation center C and has a short interval between the spot S and a spot adjacent to the spot. The pattern P19 also makes it possible to inhibit the power density from decreasing as the distance from the rotation center increases and thus it is possible to inhibit variation in power density on the surface 1a according to the site and eventually variation in the processing state of the surface 1a according to the site and processing inconsistency.

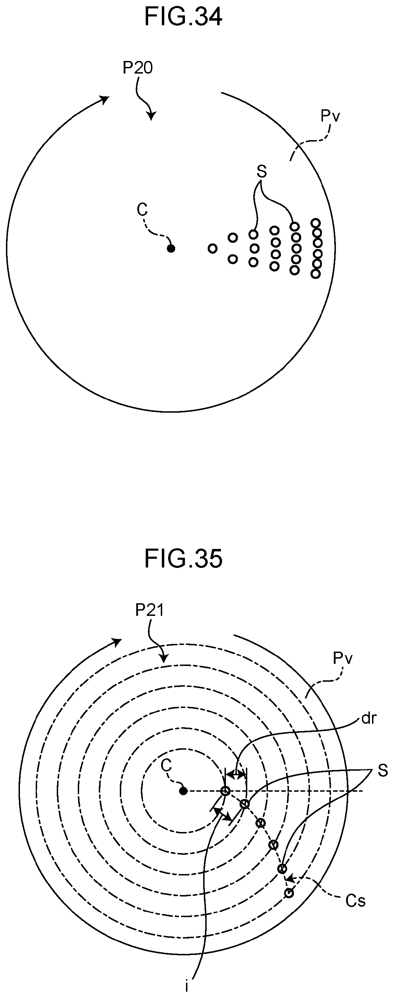

FIG. 34 is a plane view exemplifying a pattern P20 of the spots S that is formed on the virtual irradiation surface Pv. The pattern P20 also includes a plurality of the spots S that rotate on the rotation center C and includes a plurality of the spots S with different distances from the rotation center C. Note that the patten P20 has a configuration similar to that of the pattern P9 illustrated in FIG. 12. In other words, in the pattern P20, the spots S are arranged such that the number of the spots S increases as it separates from the rotation center C. In other words, the pattern P20 includes a first spot serving as at least one spot S with a distance from the rotation center C that is a first distance and a second spot serving as a plurality of the spots S with a distance from the rotation center C that is a second distance longer than the first distance and the number of the second spots is larger than the number of the first spots. The pattern P20 also makes it possible to inhibit the power density from decreasing as the distance from the rotation center increases and thus it is possible to inhibit variation in power density on the surface 1a according to the site and eventually variation in the processing state of the surface 1a according to the site and processing inconsistency.

FIG. 35 is a plane view exemplifying a pattern P21 of the spots S that is formed on the virtual irradiation surface Pv. The pattern P21 also includes a plurality of the spots S that rotate on the rotation center C and includes a plurality of the spots S with different distances from the rotation center C. Note that, in the patten P21, the spots S adjacent to each other are arranged such that an interval i in between is equal to or larger than a predetermined distance (first distance) and such that a difference dr in the distance from the rotation center C (that is, a difference in the radius) is smaller than a predetermined distance. The interval i is an interval between the centers (geometric center) of the spots S. If the interval i between the spots S adjacent to each other is too short in the spots S that are arrayed along the radial direction on the rotation center C, there will be a risk that the power density increases excessively and this causes melt or damage in a position deeper than a superficial layer to be processed. Increasing the interval as a measure has a risk that variation in power density in the radial direction will occur and an area processed sufficiently and an area processed insufficiently will be arrayed alternately on concentric circles. Reducing the power of each of the spots S without changing the interval i between the adjacent spots S as another measure has a risk that power necessary for surface processing cannot be ensured or the time required to complete required surface processing will be longer. In this respect, according to the pattern P21, the spots S adjacent to each other are arranged such that the interval i therebetween is equal to or larger than a predetermined distance and are arranged such that the difference dr in the distance from the rotation center C is smaller than the interval I and this makes it possible to inhibit the energy density from increasing excessively between the spots S adjacent to each other and set an appropriate power density while inhibiting variation in the power density distribution in the radial direction. In other words, the pattern P21 leads to an effect that it is possible to reduce processing inconsistency and further shorten the time necessary to perform processing. In the example in FIG. 35, because the interval i between the adjacent spots S is set constant (substantially equal), the spots S are arrayed substantially along a spiral curve Cs of which angular difference from the radial direction increases removably as it goes toward the outside in the radial direction.

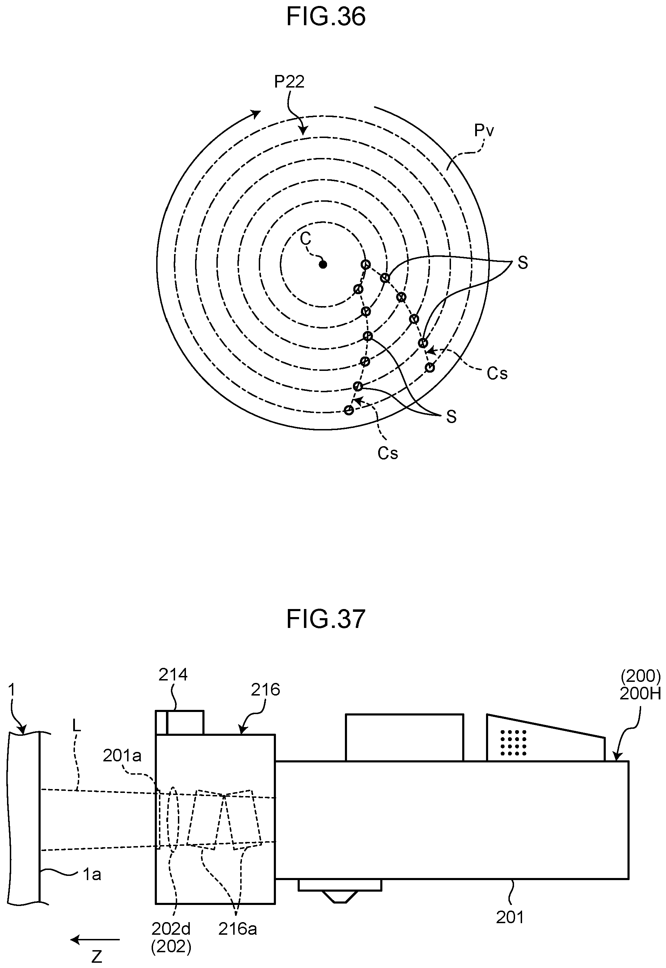

FIG. 36 is a plane view exemplifying a pattern P22 of the spots S that is formed on the virtual irradiation surface Pv. The pattern P22 also includes a plurality of the spots S that rotate on the rotation center C and includes a plurality of the spots S with different distances from the rotation center **C.** As in the pattern P21, also in the pattern P22, the spots S adjacent to each other are arranged such that the interval in between is the interval i equal to or larger than the predetermined distance and such that the difference dr in the radius on the rotation center C is smaller than the interval i. Furthermore, the patten P22 includes a plurality of groups of the spots S that are arrayed along similar curves Cs to that of the patten P21. In this case, the same effect as that in the case of the pattern P21 is obtained and it is possible to shorten the time required for processing more than in the case of the pattern P21. The same effect as that of the pattern P21 is obtained when the difference dr from the rotation center C between the adjacent spots S is smaller than the predetermined distance and the pattern of the spots S by which the effect can be obtained is not limited to those exemplified in FIGS. 35 and 36.

According to the experimental studies on the above-described various patterns by the inventers, it has been proved that, within a range of the output of the laser light between 300[W] and 9000[W] inclusive, the number of sets of diverging of the laser light, that is, the number of divisions of the spots S is preferably between 2 and 50 inclusive and is more preferably between 20 and 30 inclusive. It is estimated that, this is because, the smaller the number of divisions is, the smaller the area that can be processed at a time is and, the larger the number of divisions is, the smaller the output per spot is, and the processing speed slows. Furthermore, it is proved that, within the range of the output of the laser light and the range of the number of divisions of the spots S, the rotation rate is preferably between 100[rpm] and 5000[rpm] inclusive and is more preferably between 500[rpm] and 3000[rpm] inclusive. It is estimated that, this is because, the lower the rotation rate is, the more processing inconsistency tends to occur and, the higher the rotation rate is, the more the processing speed is slow.

### Eighth Embodiment

FIG. 37 is a side view of a schematic configuration of a portable laser surface processing device 200H (200) of an eighth embodiment. As illustrated in FIG. 37, the portable laser surface processing device 200H includes a galvanometer scanner 216 that enables scanning of the laser light L on the surface 1a.

The galvanometer scanner 216 includes a plurality of mirrors 216a and an adjustment lens 202d. By changing the angle of the mirrors 216a, it is possible to switch the direction in which the laser light L that is output from the portable laser surface processing device 200H is output. Each of the angles of the mirrors 216a is changed, for example, with a motor that is controlled by a control device (both not illustrated in the drawings). The portable laser surface processing device 200H changes the direction in which the laser light L is output while applying the laser light L, thereby enabling relative scanning of the laser light 1 on the surface 1a of the subject 1. Note that the galvanometer scanner 216, for example, is added between the DOE 202c of the portable laser surface processing device 200A of the first embodiment and the adjustment lens 202d (refer to FIG. 1). The galvanometer scanner 216 is an example of a laser scanner. The portable laser surface processing device 200H includes the galvanometer scanner 216 (laser scanner) and thus, for example, is able to increase the area of irradiation or appropriately adjust the power density distribution. Note that the galvanometer scanner 216 may be a biaxial galvanometer scanner or a single-axis galvanometer scanner. The portable laser surface processing device 200, for example, may include a laser scanner different from the galvanometer scanner 216, such as a MEMS scanner, a polygon scanner, or a resonant scanner.

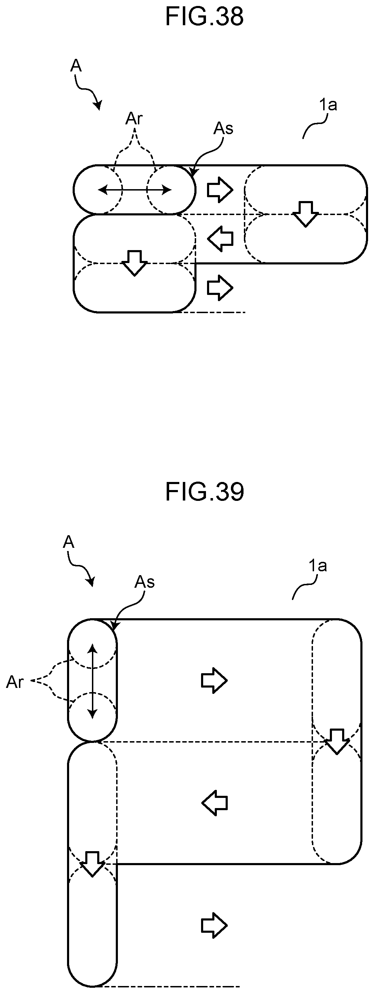

FIGS. 38 and 39 are plane views illustrating an example of a change in an area processed by the portable laser surface processing device 200H on the surface 1a. Ar in FIGS. 38 and 39 represents an area irradiated by rotation of the DOE 202c, As represents an area irradiated by scanning by the galvanometer scanner 216, and A represents an area processed by the portable laser surface processing device 200H. The open arrows represent the directions of moving of the irradiated area As in association with moving of the portable laser surface processing device 200H or a change in the posture. In order to simplify the description, scanning by the galvanometer scanner 216 is liner reciprocating scanning in the example in FIGS. 38 and 39; however, the scanning is not limited to this, and the irradiated area Ar can be scanned in any route including a curving route.

As illustrated in FIGS. 38 and 39, the galvanometer scanner 216 enables an extension of the irradiated area Ar that is formed by rotation of the DOE 202c and thus it is possible to shorten the amount of moving the portable laser surface processing device 200H by the worker W (refer to FIG. 1) or the amount of change in posture and eventually reduce the load on the worker W. According to the experimental studies by the inventors, it has been proved that the rate of scanning on the surface 1a by the laser scanner is preferably between 10[mm/s] and 500[mm/s] inclusive. It is estimated that this is because, the lower the scanning rate is, the area of processing per unit of time decreases and, the higher the scanning rate is, more processing inconsistency tends to occur.

The embodiments of the present invention are exemplified above and the above-described embodiments are examples and are not intended to limit the scope of the invention. It is possible to carry out the above-described embodiments in other various modes and various omissions, replacements, combinations and changes without departing from the scope of the invention. It is possible to change and practice the specification, such as each configuration and shape, (structure, type, direction, model, size, length, width, thickness, height, number, arrangement, position, material, etc.,) as appropriate.

### Industrial Applicability

The present invention is usable in a portable laser surface processing device and a laser surface processing system.

### Reference Signs List

1 SUBJECT (OBJECT)
1a SURFACE
1b PROCESSING POSITION
100 LASER SURFACE PROCESSING SYSTEM
200, 200A TO 200H PORTABLE LASER SURFACE PROCESSING DEVICE
201 CASING
201a WINDOW MEMBER
201b PATH (COOLING MECHANISM)
202 OPTICAL MEMBER
202a, 202b COLLIMATING LENS
202c DOE (BEAM SHAPER)
202c1 DIFFRACTION GRATING
202d ADJUSTMENT LENS
203 CONNECTOR
204 MOTOR (ELECTRIC MOTOR, AIR MOTOR, ROTATION MECHANISM, MOVING MECHANISM)
205 ROTATION TRANSMISSION MECHANISM
206 SLIDER
207 ROTATION-LINEAR MOTION CONVERSION MECHANISM (RECIPROCATION MECHANISM, MOVING MECHANISM)
208 GUIDE
208a EXTENDING PORTION
208b CONTACT PORTION
208c STRETCHING PORTION
209 DISTANCE SENSOR (DISTANCE MEASUREMENT MECHANISM)
210 DISPLAY (DISPLAY MECHANISM, ALERT OUTPUT MECHANISM)
211 SPEAKER (ALERT OUTPUT MECHANISM)
212 ARITHMETIC PROCESSING UNIT
212a DISTANCE MEASUREMENT UNIT (DISTANCE MEASUREMENT MECHANISM)
212b DETERMINATION UNIT (ALERT OUTPUT MECHANISM)
212c OUTPUT CONTROLLER (DISPLAY MECHANISM, ALERT OUTPUT MECHANISM)
212d POSITION DETECTOR (POSITION DETECTION MECHANISM)
212e TEMPERATURE DETECTOR (TEMPERATURE DETECTION MECHANISM)
213 CAMERA (POSITION DETECTION MECHANISM)
214 INFRARED CAMERA (TEMPERATURE DETECTION MECHANISM)
215 GRIP
300 BOARDING APPARATUS
301 LIGHT SOURCE DEVICE
302 POWER SOURCE DEVICE
303 COOLING DEVICE (COOLING MECHANISM)
400 CABLE
401 OPTICAL FIBER CABLE
402 ELECTRIC CABLE
403 REFRIGERANT TUBE
A PROCESSED AREA
Ar IRRADIATED AREA
As IRRADIATED AREA
Ax OPTICAL AXIS
C ROTATION CENTER
C1, C2 CIRCUMFERENCE
Cs CURVE
D1 DIRECTION
dr DIFFERENCE
i INTERVAL
L LASER LIGHT
Ld LASER LIGHT
P1 TO P22 PATTERN
Ps1 POSITION (FIRST POSITION)
Ps2 POSITION (SECOND POSITION)
Pv VIRTUAL IRRADIATION SURFACE
R1 RADIUS (FIRST RADIUS)
R2 RADIUS (SECOND RADIUS)
S1 SPOT (FIRST SPOT)
S2 SPOT (SECOND SPOT)
W WORKER
Z DIRECTION (FIRST DIRECTION)

## Claims

1. A portable laser surface processing device comprising:
a casing configured to house an optical component; and
a beam shaper serving as the optical component configured to divide laser light into a plurality of beams,
wherein the portable laser surface processing device is configured to output the laser light divided into the plurality of beams by the beam shaper to a surface of an object to process the surface, and
the portable laser surface processing device comprises a moving mechanism configured to move the beam shaper with respect to the casing such that spots of the plurality of beams move on the surface while the laser light is output.

2. The portable laser surface processing device according to claim **1,** wherein the moving mechanism includes a rotation mechanism configured to rotate the beam shaper with respect to the casing such that the spots of the plurality of beams rotate on the surface.

3. The portable laser surface processing device according to claim **2,** wherein the rotation mechanism includes an electric motor.

4. The portable laser surface processing device according to claim 2, wherein the rotation mechanism includes an air motor.

5. The portable laser surface processing device according to claim 2, wherein
the portable laser surface processing device is configured to output the laser light in a first direction,
the plurality of beams form a pattern of a plurality of spots that rotate about a rotation center on a virtual irradiation surface intersecting with the first direction, and
in a state of not rotating, the pattern includes a plurality of spots that are separate from the rotation center on the virtual irradiation surface and does not include the spot overlapping the rotation center.

6. The portable laser surface processing device according to claim **2,** wherein
the portable laser surface processing device is configured to output the laser light in a first direction,
the plurality of beams form a pattern of a plurality of spots that rotate about a rotation center on a virtual irradiation surface intersecting with the first direction, and
in a state of not rotating, the pattern includes a plurality of spots that are separate from the rotation center on the virtual irradiation surface and includes the spot overlapping the rotation center and having power lower than that of the spots separating from the rotation center.

7. The portable laser surface processing device according to claim **2,** wherein
the portable laser surface processing device is configured to output the laser light in a first direction,
the plurality of beams form a pattern of a plurality of spots that rotate about a rotation center on a virtual irradiation surface intersecting with the first direction, and
in a state of not rotating, the pattern includes a plurality of spots with different distances from the rotation center on the virtual irradiation surface.

8. The portable laser surface processing device according to claim 7, wherein
the portable laser surface processing device is configured to output the laser light in a first direction,
the plurality of beams form a pattern of a plurality of spots that rotate about a rotation center is formed on a virtual irradiation surface intersecting with the first direction, and
in a state of not rotating, the pattern includes a plurality of first spots that are positioned on a circumference with a first radius from the rotation center and a plurality of second spots that are positioned on a circumference with a second radius longer than the first radius from the rotation center on the virtual irradiation surface, and
power of the second spots is larger than power of the first spots.

9. The portable laser surface processing device according to claim 7 or 8, wherein
the portable laser surface processing device is configured to output the laser light in a first direction,
the plurality of beams form a pattern of a plurality of spots that rotate about a rotation center on a virtual irradiation surface intersecting with the first direction, and
in a state of not rotating, the pattern includes a plurality of first spots that are positioned on a circumference with a first radius from the rotation center and a plurality of second spots that are positioned on a circumference with a second radius longer than the first radius from the rotation center on the virtual irradiation surface, and
the number of the second spots is larger than the number of the first spots.

10. The portable laser surface processing device according to claim 2, wherein
the portable laser surface processing device is configured to output the laser light in a first direction,
the plurality of beams form a pattern of a plurality of spots that rotate about a rotation center on a virtual irradiation surface intersecting with the first direction, and
in the pattern in a state of not rotating, the spots adjacent to each other are arranged such that an interval of the spots is equal to or larger than a first distance and are arranged such that a difference between distances from the rotation center to the spots is smaller than the first distance.

11. The portable laser surface processing device according to claim 2, wherein
the portable laser surface processing device is configured to output the laser light in a first direction,
the plurality of beams form a pattern of a plurality of spots that rotate about a rotation center on a virtual irradiation surface intersecting with the first direction, and
in a state of not rotating, the pattern includes a plurality of spots that are arranged substantially along a line passing through the rotation center.

12. The portable laser surface processing device according to claim 11, wherein, in a state of not rotating, the pattern includes a plurality of spots that are arranged in an I shape, a T shape, or a cross shape.

13. The portable laser surface processing device according to claim 11, wherein, in a state of not rotating, the pattern includes a plurality of spots that are arranged along a curve with an angle with respect to a radial direction of the rotation center that gradually increases as it separates from the rotation center.

14. The portable laser surface processing device according to claim 1, wherein the moving mechanism includes a reciprocation mechanism configured to reciprocate the beam shaper with respect to the casing such that the spots of the plurality of beams reciprocate between a first position and a second position on the surface.

15. The portable laser surface processing device according to any one of claims 1, 2, and 14, comprising a laser scanner configured to scan the laser light on the surface.

16. The portable laser surface processing device according to any one of claims 1, 2, and 14, wherein the laser light is continuous waves.

17. The portable laser surface processing device according to any one of claims 1, 2, and 14, wherein the optical component is configured such that the optical component is replaceable.

18. The portable laser surface processing device according to any one of claims 1, 2, and 14, wherein
the optical component includes a lens, and
the lens is configured such that a position in an optical axis direction is changeable.

19. The portable laser surface processing device according to any one of claims 1, 2, and 14, comprising a guide extending from the casing to the surface to make a contact with the surface.

20. The portable laser surface processing device according to any one of claims 1, 2, and 14, comprising a distance measurement mechanism fixed to the casing and configured to measure a distance to the surface.

21. The portable laser surface processing device according to claim 20, comprising a display mechanism configured to display the distance measured by the distance measurement mechanism.

22. The portable laser surface processing device according to claim 20, comprising an alert output mechanism configured to output an alert when the distance measured by the distance measurement mechanism is out of a predetermined range.

23. The portable laser surface processing device according to any one of claims 1, 2, and 14, comprising a position detection mechanism fixed to the casing and configured to detect a position of processing on the surface.

24. The portable laser surface processing device according to claim 23, comprising an alert output mechanism configured to output an alert when an amount of change in the position of processing that is detected by the position detection mechanism over time is smaller than a predetermined amount.

25. The portable laser surface processing device according to any one of claims 1, 2 and 14, comprising a temperature detection mechanism fixed to the casing and configured to detect a temperature of the surface.

26. The portable laser surface processing device according to claim 25, comprising an alert output mechanism configured to output an alert when the temperature detected by the temperature detection mechanism is larger than a predetermined temperature.

27. The portable laser surface processing device according to any one of claims 1, 2 and 14, comprising a cooling mechanism configured to cool the casing.

28. The portable laser surface processing device according to any one of claims 1, 2 and 14, wherein the casing has a substantially cylindrical shape.

29. The portable laser surface processing device according to any one of claims 1, 2 and 14, comprising a grip for gripping.

30. The portable laser surface processing device according to claim 29, wherein the grip protrudes from the casing.

31. The portable laser surface processing device according to claim 30, wherein the casing and the grip are connected such that the casing and the grip are foldable.

32. The portable laser surface processing device according to claim 29, wherein the casing and the grip are configured such that an angle of folding is changeable.

33. The portable laser surface processing device according to claim 29, wherein the grip is bendable.

34. The portable laser surface processing device according to claim 33, wherein the grip is configured such that a shape of bending is changeable.

35. A laser surface processing system comprising:
the portable laser surface processing device according to any one of claims 1, 2 and 14;
a light source device including a laser device configured to output the laser light;
a cable extending between the portable laser surface processing device and the light source device,
wherein the cable includes optical fibers configured to transmit laser light output by the laser device to the portable laser surface processing device.
